# EUROPEAN PATENT APPLICATION

(11) **EP 2 319 379 A1**
(43) Date of publication of application: **11.05.2011**
(21) Application number: 10189562.1
(22) Date of filing: 01.11.2010
(51) Int. Cl.: A47J 37/08

(54) **Toaster**

(30) Priority: 30.10.2009 GB 0919056
(71) Applicant: Sagentia Ltd, Cambridgeshire CB22 7GG (GB)
(72) Inventor: Steer, William Andrew, Cambridgeshire CB22 7GG (GB)
(74) Representative: Martin, Philip John

(57) **Abstract**

We describe an electric toaster or grill for toasting or grilling foodstuffs and the like, comprising: at least one electric heating element for toasting or grilling a foodstuff; and a browning sensor located to receive an air flow from said toasted or grilled foodstuff said air flow entraining particulates from said toasting or grilling; wherein the browning sensor comprises: preferably an electrically conductive chamber or cage including an aperture to enable said air flow including said entrained particulates to pass through the chamber or cage; an ion emitter comprising a heatable electrical conductor; a heating circuit to pass an electrical current through said heatable electrical conductor to heat said electrical conductor to generate ions from said the particulates entrained in said air flow; an ion current sensing electrode to receive said ions from generated from said particulates; a bias circuit to electrically bias one of said heatable electrical conductor and said ion current screening electrode with respect to the other to attract said ions to said ion current sensing electrode; and an ion current sense circuit having an input coupled to said ion current sensing electrode and having an output for controlling said toaster or grill in response to a degree of browning or grilling indicated by a sensed ion current generated by said particulates from said toasting or grilling of said foodstuff.

## Description

### FIELD OF THE INVENTION

This invention relates to toasting/grilling apparatus for toasting/grilling of foodstuffs without burning. More particularly the invention relates to improved techniques for detecting browning of toasted/grilled foodstuffs prior to burning.

### BACKGROUND TO THE INVENTION

Various smoke-detecting techniques are known (see, for example, US5,874,314 and US4,176,311), but it is desirable in a toaster/grill to detect browning of bread before the bread burns. A technique for detecting illicit drugs using surface ionisation is described in US5,426,056.

A toasting device with a browning control which does not rely on burning is described in GB2,367,482B (US6,543,337; WO01/00073). This uses an ionisation source, such as an alpha radiation source, in an ionisation chamber - particulates emanating from toasting products enter the ionisation chamber and cause a drop in current which may be used, for example, to stop the toasting. However the currents are very small and can also be confused by ions generated from the toaster elements themselves. Further background prior art can be found in: US2005/019469; WO2004/039224; and US4,319,110.

Accordingly there is a need for improved techniques for detection of the browning of toast and the like, preferably at low cost, preferably without using a radioactive source. In particular there is a need for a technique with better reliability (larger signals), and improved robustness to that of GB'482 (US'337).

### SUMMARY OF THE INVENTION

According to a first aspect of the invention there is therefore provided an electric toaster or grill for toasting or grilling foodstuffs and the like, comprising: at least one electric heating element for toasting or grilling a foodstuff; and a browning sensor located to receive an air flow from said toasted or grilled foodstuff, said air flow entraining particulates from said toasting or grilling; wherein the browning sensor comprises: an ion emitter comprising a heatable electrical conductor; a heating circuit to pass an electrical current through said heatable electrical conductor to heat said electrical conductor to generate ions from said the particulates entrained in said air flow; an ion current sensing electrode to receive said ions from generated from said particulates; a bias circuit to electrically bias one of said heatable electrical conductor and said ion current screening electrode with respect to the other to attract said ions to said ion current sensing electrode; and an ion current sense circuit having an input coupled to said ion current sensing electrode and having an output for controlling said toaster or grill in response to a degree of browning or grilling indicated by a sensed ion current generated by said particulates from said toasting or grilling of said foodstuff.

In preferred embodiments an electrically conductive chamber or cage of the browning sensor traps (positive) ions from the heating element of the toaster/grill which could otherwise provide a false signal. In embodiments one or both of the ion emitter and the ion current sensing electrode are electrically insulated from the chamber or cage, and located within the chamber or cage. The browning sensor may be mounted above a region in which the foodstuff is toasted/grilled so that the airflow is generally upwards from the heating element. More generally convection driven by the heating element may be used to generate the air flow entraining the particulates, and this convective drive may be employed to direct the airflow within the apparatus towards the browning sensor, for example employing an air sampling tube or channel located in the vicinity of the foodstuff. Additionally or alternatively a fan (or other means for moving air) may be employed to direct the airflow towards the browning sensor.

In some embodiments the chamber has an aperture at either end to enable the air flow to flow through the chamber; in such an arrangement the ion current sensing electrode may be arranged generally concentrically with an axis of the airflow. In other arrangements the chamber may comprise a perforated metal enclosure. In still other arrangements (positive) ions from the heating element may be otherwise trapped, deflected, screened or neutralised (in the latter case, for example, by means of an ion gun).

In embodiments an ac bias voltage may be applied since for a portion of the ac cycle the ion emitter will be biased positive with respect to the ion current sensing electrode, to thereby drive the desired ion current. Thus in embodiments the relatively high bias voltage may be derived from an ac mains (line) power supply for the toaster/grill. In other arrangements a simple half wave or full wave rectification circuit may be employed to derive a quasi dc or dc voltage for the bias circuit from the ac mains voltage supply.

It has been observed that ion current-based detection of browning is not always reliable immediately after first heating the ion-generating heater (filament). Therefore some preferred embodiments of the toaster/grill incorporate a timer or pre-heater control circuit to enable pre-heating of the heatable electrical conductor prior to sensing the ion current. Alternatively the device may be configured to disregard an output from the ion current sense circuit for an initial toasting or grilling period. The use of an initial period of pre-heating where the output from the ion current sense circuit is not used for browning level sensing appears important in practical implementations of the technique.

In embodiments the ion-generating heatable electrical conductor comprises a heatable wire filament. In embodiments this filament has a curved, arcuate or hoop shape, because this provides a useful cracking surface for the organic particulates without substantial electron emission which could result from a more sharply pointed shape.. In other embodiments however other heater shapes, for example a flat plate or thin film (for example a semiconducting film, for example, of doped tin oxide), may alternatively be employed.

The output from the ion current sense circuit may be used to control the toaster/grill to provide an audible or visual alert dependent upon a degree of browning and/or a browning level indication. However preferred embodiments include a heating element control circuit to control the heating element, more particularly a duration of the toasting/grilling in response to a user input desired level of browning and the detected ion current.

In a related aspect the invention provides a method of detecting a degree of browning of a foodstuff, the method comprising: heating said foodstuff to drive off organic particulate matter from said foodstuff prior to smoke-generating burning of said foodstuff; generating ions from said organic particulate matter; and detecting a level of ions from said ionised particulate matter to detect said degree of browning.

Thus in embodiments of the method the heating is performed substantially without generating smoke from burning of the foodstuff. The level or quantity of ions is, in preferred embodiments, detected by detecting an increase in a flow of electrical current resulting from movement of the ions between a pair of electrical conductors. As previously mentioned, preferred embodiments of the technique employ an electrical heating element, in which case ions from this element are preferably trapped, neutralised or screened prior to detecting ions resulting from ionisation of the organic particulate matter. However in principle embodiments of the technique may be employed with a gas-driven toaster or grill.

In a related aspect the invention provides a toaster or grill for toasting or grilling foodstuffs and the like including a browning detection system for detecting a degree of browning of a said foodstuff, said toaster or grill comprising: means for heating said foodstuff to drive off organic particulate matter from said foodstuff prior to smoke-generating burning of said foodstuff; said browning detection system comprising: means generating ions from said organic particulate matter; and means for detecting a level of ions from said ionised particulate matter to detect said degree of browning.

It appears that organic particulate matter is driven off a toasted foodstuff, for example bread, well before burning commences. This appears to result from two main processes, caramelisation (the oxidation of sugars, starches and the like), and the Maillard reaction on the surface of the foodstuff (a chemical reaction between an amino acid and a reducing sugar). Both these processes appear to produce invisible organic particulates which, in embodiments of the techniques we employ are heated to form ions which in turn results in a measurable ion current the level of which can be used to determine the level of browning since the measured current increases with the level of browning. Although, as described above, practical implementations of the technique appear to work best when positive ions are detected it has also proved possible to implement the system by detecting negative ions (the filament is negatively biased with respect to the ion current sensing electrode), although the detected currents appear smaller.

### BRIEF DESCRIPTION OF THE DRAWINGS

These and other aspects of the invention will now be further described, by way of example only, with reference to the accompanying figures in which:
Figure 1 shows an example of a basic ion chamber sensing configuration for use with an electric toaster or grill according to an embodiment of the invention;
Figure 2 shows a second example of an ion chamber configuration;

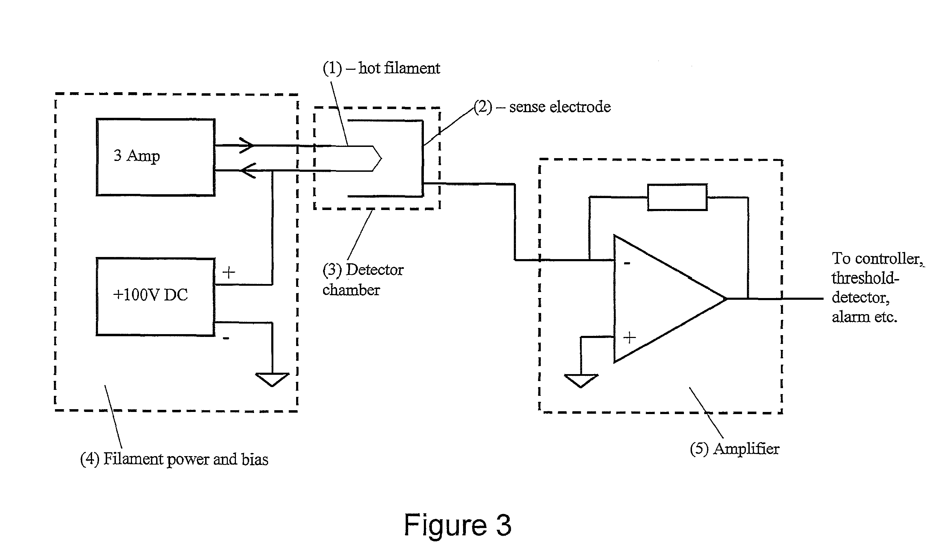

Figure 3 shows a wiring/circuit diagram for an embodiment of a browning sensor;
Figure 4 shows a simplified schematic illustration of an ion generation process which is believed to occur in embodiments of the invention; and
Figure 5 shows an example of a toaster suitable for use with embodiments of the browning sensor system we describe.

### DETAILED DESCRIPTION OF PREFERRED EMBODIMENTS

We will describe a hot-wire based ionisation-chamber system which exhibits a marked increase in magnitude of ion-current in the presence of smoke, and when operated in conjunction with a toaster also gives an easily-detected signal which increases with the degree of browning of the toast.

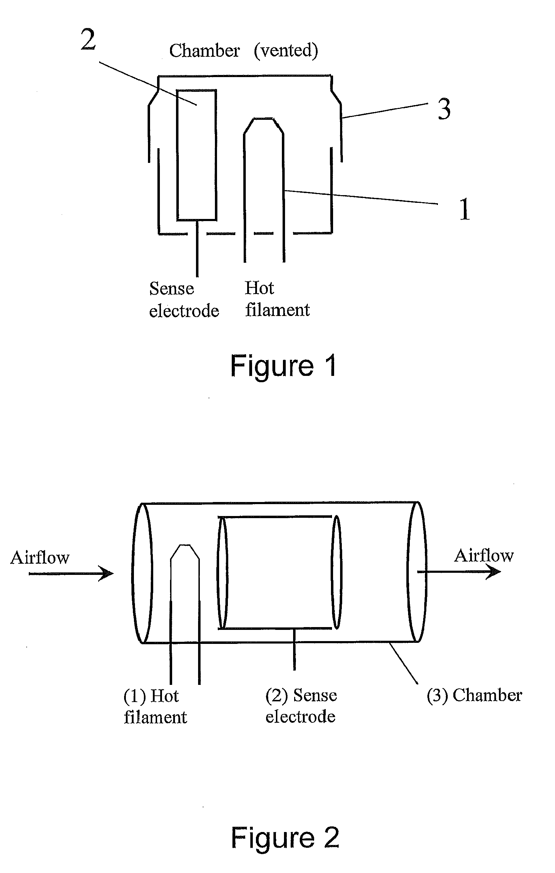

Referring to Figure 1, the detector comprises an outer metal chamber enclosure which is perforated in some manner to allow the air to circulate within in a controlled way, a sense electrode within the chamber and electrically insulated from the chamber, and a bare hot wire element substantially within the chamber. The metallic outer chamber confers the benefit of electrical screening to the inner high-impedance electrode. Figure 2 shows an alternative configuration with a through-air flow.

The short (e.g. 20mm) hot wire is heated to red/dull-orange heat by passing an electrical current through it. Depending on the dimensions of the wire, this may require 1∼3 amps of current with a potential drop of 1∼3 volts. Further, this wire is operated at an overall potential bias some +100 volts above ground potential. To inhibit oxidising in air, a suitably inert metal such as nichrome or platinum is employed in a preferred embodiment.

The sense-electrode is connected to a sensitive current-amplifier, for example a discrete JFET or a JFET-input op-amp. Other arrangements such as a two-part differential chamber construction and/or a voltage-input amplifier (for example sensing charge on an input capacitor) may alternatively be employed. In a present prototype, the sense electrode is operated near ground potential, although operation at an overall negative potential may prove advantageous.

A hot wire (typically glowing red) will emit positive ions, especially when subjected to a positive bias (typically some tens of volts or more). A new wire typically gives an elevated current, which decreases over minutes/hours/days e.g. (J J Thomson, "Conduction of Electricity Through Gasses" 1906). After the wire has been left cold in air for some days, in general on the first heating some elevated initial current will be seen. With the strongly positive bias voltages shown (e.g. +100V, and depending on the metal), this substantially decays within the first minute of operation.

When a new wire is first used, a significant ion current may flow from it when the circuit is energised. This decreases over hours/minutes. The effect appears less from platinum than for nichrome. Consequently a new sensor may need to be 'broken in' / 'worn in' for a few tens of minutes on first use (or at the factory). It may be possible to accelerate this 'wearing in' by means of greater filament current (temperature) and/or greater bias potential.

After the sensor has been switched off in air for a few days, on first switch on, the ion current may be temporarily elevated. This decreases over a few tens of seconds (at circa+100V bias), but is strongly dependent on the filament bias voltage (higher voltage causes a more intense, but briefer, ion current). Consequently the appliance may pre-heat the wire for a minute or so before it is required, or otherwise ignore the output for the initial time (minute or so).

A prototype sensor gives a small ion-current due to temperature alone when heated to 100∼150C. With appropriate bias and airflow, the signal due to cooking toast is much greater than this change in background, and the background issue is negligible.

Sensitivity of the sensor is dependent on the geometry of the sensing-chamber and on airflow. On the one hand, moving air can flush ions out of the chamber so they do not reach the sense-electrode, but on the other hand a certain amount of air-movement is required to bring new or volatile organics into the chamber the device appears to 'consume' the organics). The skilled person may determine an appropriate balance by experiments to optimise any particular design. Figures 1 and 2 show some example configurations; others will work.

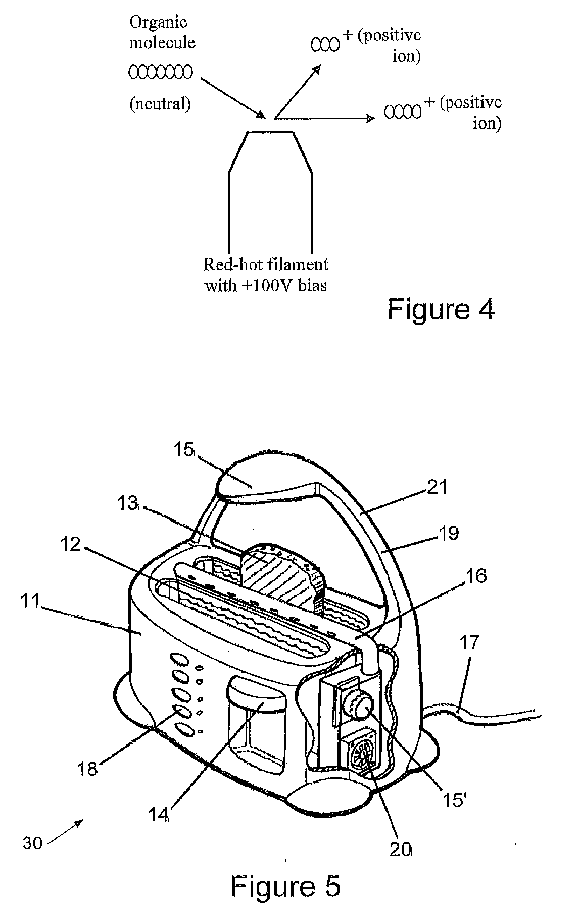

The naked hot-wire elements in toasters and the like can release positive ions, which can give a false signal in the detector described above. Suitable enclosure within a metal can and/or the use of a negatively-biased ion-trap between the toaster exhaust and the sensor can address this problem. Without wishing to be limited by theory, Figure 4 shows a presumed reaction at the filament.

Referring next to Figure 5, this shows an example of a toaster in combination with which a browning sensor system as described above may be used. The toaster 30 comprises a housing 11 with electrical heating elements 12, apparatus for holding bread 13 to be toasted, the apparatus including an actuator 14. The toaster is mains (line) powered via cable 17 and has a control 18 to select a desired level of browning. A browning sensor as described above may be provided at location 15 on support 19 with electrical power via connections 21 or air in the vicinity of the toasted bread may be sniffed by conduit 16 and fan 20 and delivered to a browning level sensor at location 15 prime, which may be within housing 11.

Broadly speaking we have described a sensor which may be employed to detect the browning of cooking foodstuffs, using an ionisation technique which does not require a radioactive ionisation source.

In embodiments the sensor comprises a vented outer envelope substantially enclosing a hot wire element and a sense electrode used to collect ions. In use an electric current is driven through the element to heat it (to dull red to orange heat) and this hot wire element is further biased at a positive potential relative to ground (or relative to the sense electrodes) at a voltage of, for example, at least 10 volts, 30 volts, 50 volts, 100 volts, 150 volts or 200 volts. The use of a significant bias voltage is advantageous as it helps provide a stable response, which is useful in achieving reliable operation.

The sense electrode is electrically connected to an amplifier circuit which is preferably capable of detecting current flows from the electrode in the range picoamps to nanoamps. The presence of volatile chemicals from the browning foodstuffs is detected as an increase in magnitude of current flow from the hot filament to the sense electrode.

When integrated into a toaster for the purposes of browning of toast, the termination of the cooking cycle can be triggered when the sensor indicates that a predefined or user selected level of browning has occurred. Optionally in embodiments the current flow from the sense electrode may be integrated to determine a level of browning.

The skilled person will appreciate that a sensor as described above may, potentially, be integrated into other cooking appliances than a toaster or grill, for example to provide feedback to regulate or terminate a cooking procedure. Potentially embodiments of the body may even be employed when cooking materials other than foodstuffs, for example a material or materials in a manufacturing process. As previously described, optionally a fan may be employed to withdraw volatile organic materials from the cooking (browning) into past the sensor.

In a mains powered toaster or grill a very simple circuit may be employed to derive a high voltage dc bias from the mains power supply for the heating element. This bias voltage may be rectified but need not be smoothed - the sensor will operate provided that there are times during which the hot filament experiences positive bias. Potentially an ac voltage may be employed again provided that during some part of the ac cycle the ion generating heater is positively biased with respect to the ion sensing (collecting) electrode. In embodiments a semi conductor (diode and/or transistor) circuit is used to provide an asymmetric drive way form to provide a bias voltage for the browning level sensor. In some preferred embodiments the ion generating heater comprises a hot wire filament made from platinum or nichrome.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. An electric toaster or grill for toasting or grilling foodstuffs and the like, comprising:
at least one electric heating element for toasting or grilling a foodstuff; and
a browning sensor located to receive an air flow from said toasted or grilled foodstuff, said air flow entraining particulates from said toasting or grilling;
wherein the browning sensor comprises:
an ion emitter comprising a heatable electrical conductor;
a heating circuit to pass an electrical current through said heatable electrical conductor to heat said electrical conductor to generate ions from said the particulates entrained in said air flow;
an ion current sensing electrode to receive said ions from generated from said particulates;
a bias circuit to electrically bias one of said heatable electrical conductor and said ion current screening electrode with respect to the other to attract said ions to said ion current sensing electrode; and
an ion current sense circuit having an input coupled to said ion current sensing electrode and having an output for controlling said toaster or grill in response to a degree of browning or grilling indicated by a sensed ion current generated by said particulates from said toasting or grilling of said foodstuff.

2. An electric toaster or grill as claimed in claim 1 wherein said browning sensor further comprises an electrically conductive chamber or cage including an aperture to enable said air flow including said entrained particulates to pass through the chamber or cage, in particular wherein said ion current sensing electrode is electrically insulated from said electrically conductive chamber or cage.

3. An electric toaster or grill as claimed in claim 1 or 2 wherein said electrically conductive chamber or cage comprises either a perforated metal enclosure or a chamber having an aperture at either end to enable said air flow to flow through said chamber; in particular wherein said ion current sensing electrode is arranged generally concentrically with an axis of said air flow.

4. An electric toaster or grill as claimed in any preceding claim wherein said bias circuit is configured to provide a time-varying or ac bias voltage, such that there are times when said heatable electrical conductor is biased positive with respect to said ion current sensing electrode; in particular wherein said toaster or grill is mains (line) powered, and wherein said bias voltage comprises an ac voltage derived from a mains line power supply to said toaster or grill.

5. An electric toaster or grill as claimed in any preceding claim wherein said toaster or grill is mains (line) powered and wherein said bias circuit is configured to derive a bias voltage of at least 50 volts from a mains (line) power supply to said toaster or grill.

6. An electric toaster or grill as claimed in any preceding claim further comprising a timer or pre-heater control circuit for said heatable electrical conductor to pre-heat said heatable electrical conductor prior to sensing said ion current.

7. An electric toaster or grill as claimed in any preceding claim configured to disregard ac output from said ion current sense circuit for an initial toasting or grilling period.

8. An electric toaster or grill in any preceding claim further comprising a heating element control circuit coupled to said output of said ion current sense circuit to control a duration of said toasting or grilling in response to said indicated degree of browning detected by an increase in said ion current.

9. A method of detecting a degree of browning of a foodstuff, the method comprising:
heating said foodstuff to drive off organic particulate matter from said foodstuff prior to smoke-generating burning of said foodstuff;
generating ions from said organic particulate matter; and
detecting a level of ions from said ionised particulate matter to detect said degree of browning.

10. A method as claimed in claim 9 wherein said heating is performed substantially without generating smoke from burning of said foodstuff.

11. A method as claimed in claim 9 or 10 wherein said detecting comprises detecting an increase in a flow of electrical current resulting from movement of said ions between electrical conductors.

12. A method as claimed in claim 9, 10 or 11 wherein said heating comprises electrical heating using a heating element, the method further comprising one or more of trapping, neutralising and screening of ions from said heating element prior to said detecting of said ions.

13. A toaster or grill for toasting or grilling foodstuffs and the like including a browning detection system for detecting a degree of browning of a said foodstuff, said toaster or grill comprising:
means for heating said foodstuff to drive off organic particulate matter from said foodstuff prior to smoke-generating burning of said foodstuff;
said browning detection system comprising:
means generating ions from said organic particulate matter; and
means for detecting a level of ions from said ionised particulate matter to detect said degree of browning.

14. A toaster or grill as claimed in claim 13 wherein said means for detecting comprises means for detecting an increase in a flow of electrical current resulting from movement of said ions between electrical conductors.

15. A toaster or grill as claimed in claim 13 or 14 further comprising means for one or more of trapping, neutralising and screening of ions from said means for heating.
